# FASCICULE DE BREVET EUROPEEN

(11) **EP 2 274 451 B1**
(45) Date de publication et mention de la délivrance du brevet: **30.05.2012**
(21) Numéro de dépôt: 09728020.0
(22) Date de dépôt: 16.02.2009
(51) Int. Cl.: C22B 9/02, B22C 9/08, B22D 21/04, B01D 39/20

(54) **FILTRE DESTINE A LA FONDERIE DE PIECES EN ALLIAGE D' ALUMINIUM, MAGNESIUM, CUIVRE ET SIMILAIRES**
FILTER ZUR GIESSUNG VON TEILEN AUS ALUMINIUM-, MAGNESIUM-, KUPFER- UND ÄHNLICHEN LEGIERUNGEN
FILTER INTENDED FOR THE FOUNDRY OF PARTS MADE FROM ALUMINUM, MAGNESIUM, COPPER, AND SIMILAR ALLOYS

(30) Priorité: 01.04.2008 FR 0852147
(43) Date de publication de la demande: 19.01.2011
(73) Titulaire: Saint Jean Industries, 69220 Saint Jean d'Ardieres (FR)
(72) Inventeur: MARCELINO, Emile, F-69380 Marcilly d'Azergues (FR)
(74) Mandataire: Dupuis, François
(86) Numéro de dépôt international: PCT/FR2009/050237
(87) Numéro de publication internationale: WO 2009/122048

(56) Documents cités:
- FR-A- 2 021 462
- FR-A- 2 419 750
- GB-A- 1 192 583
- GB-A- 2 420 601
- JP-A- 1 143 739
- JP-A- 63 052 742
- JP-A- 63 224 837

## Description

L'invention se rattache au secteur technique de la fabrication de pièces en alliage d'aluminium, magnésium, cuivre et similaires, en particulier avec les équipements entourant un moule de fonderie en gravité ou basse pression.

L'invention se rattache plus particulièrement aux filtres utilisés avec les moules de fonderie situés au dessus de four récepteur d'alliages en aluminium ou similaire et aux installations les recevant.

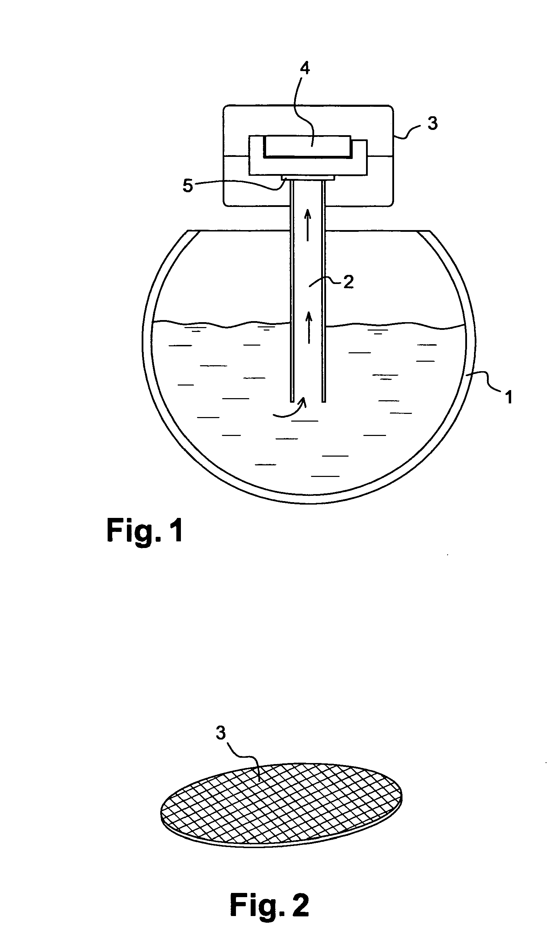

On a représenté schématiquement un tel équipement, selon l'art antérieur connu, figure 1 des dessins. Un four (1) de forme quelconque reçoit intérieurement, dans une grande partie de son volume, un fluide liquide à haute température, défini par un alliage d'aluminium ou similaire, tout en laissant libre un volume intérieur (V1) d'air. Un dispositif plongeur (2) vertical est disposé dans la partie supérieure du four avec, en débordement, le moule (3) récepteur de la pièce à fabriquer (4). Le tube débouche dans la partie inférieure du moule, lequel est aménagé avec un emplacement récepteur d'un filtre (5). Un moule récepteur de la pièce à fabriquer est placé au-dessus du four. La jonction moule-four est réalisée par un tube plongeur. Entre le tube plongeur et le moule, on met un filtre permettant de retenir les oxydes. Une pression exercée sur V1 fait remonter le fluide à travers le tube traversant le filtre puis remplissant l'empreinte du moule. Ces filtres sont réalisés en pratique sous forme de plaque plate de forme, par exemple, en disque, en carré, rectangle, dans une configuration en treillis selon une maille plus ou moins importante. Ces filtres, métalliques ou en fibre de verre, ont donc pour fonction de limiter et de réduire, voire empêcher, le transfert d'oxydes d'aluminium et similaires du bain dans le moule de fabrication de la pièce à obtenir. Ces filtres doivent être maintenus en position dans leur siège de réception au niveau de la masselotte de la pièce afin d'assurer une réelle étanchéité. On a ainsi illustré la conformation d'un filtre selon l'art antérieur figure 2.

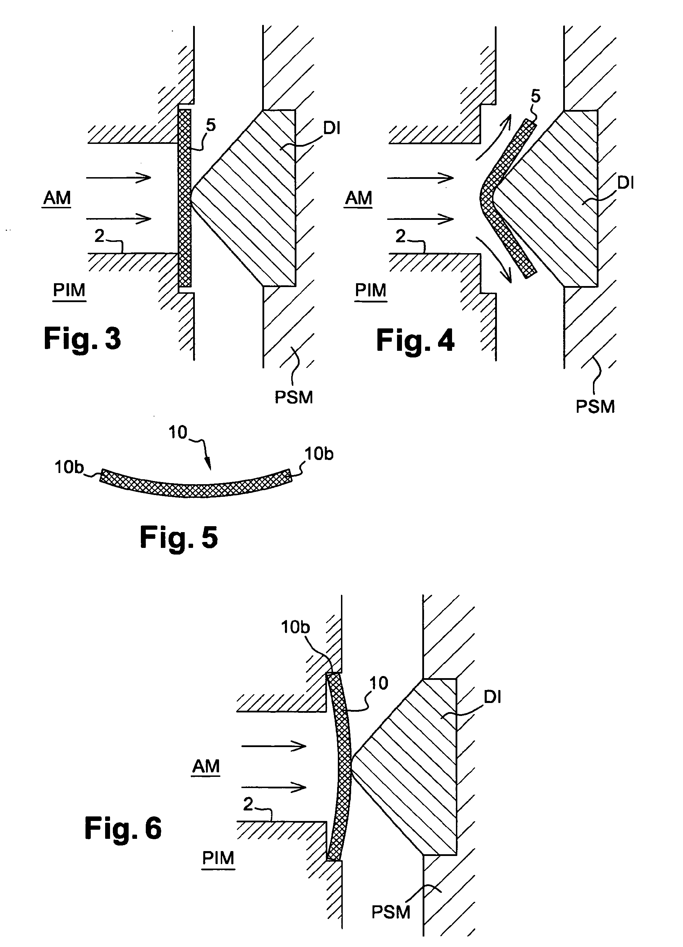

Différents problèmes sont cependant rencontrés en pratique, à savoir :
- Un problème de stabilité des filtres est rencontré qui ont tendance à être décollés de leur siège sous l'effet des pressions exercées par le déplacement des fluides provoquant ainsi des pertes d'étanchéité et donc une absence de contrôle de la filtration des particules oxydées. Le mouvement du fluide entraîne des turbulences générant le soulèvement des filtres et la suppression de l'étanchéité ou la déformation du filtre dans une configuration en V, en laissant passer de l'alliage liquide non filtré. On a ainsi représenté, aux figures 3 et 4 schématiquement, cette situation. La référence AM illustre l'arrivée du métal par le tube, la référence PIM la partie inférieure du moule, la référence PSM, la partie supérieure du moule, et la référence DF le diffuseur. On a représenté aussi la déformation du filtre.
- Un autre problème réside dans le fait que lorsque l'on vient couler du métal liquide sur les filtres de l'art antérieur, ces derniers dégazent et de ce fait créer des dégazements gazeux dans le moule susceptibles de créer des oxydes.
- Par ailleurs, la mise en place des filtres en fond de moule s'effectue, à la connaissance du demandeur, manuellement.

Un autre problème réside dans le fait que les filtres, tels que réalisés selon l'art antérieur, ne sont pas récupérables. Les filtres de l'art antérieur sont d'une densité trop importante et ils tombent au fond des bains de métal liquide ce qui rend le recyclage de l'ensemble masselotte + filtre impossible.

On connaît par les brevets FR 2 021 462 et JP 63 042 742 des tissus de fibres de verre imprégnés de résine phénolique en vue d'améliorer la rigidité des tissus utilisés comme filtre pour la coulée de pièces en métal léger. Les brevets FR 2 419 750 et GB 2 420 601 font également partie de l'état de la technique.

La démarche du demandeur a donc été de réfléchir à une nouvelle conception de filtres susceptibles de répondre aux différents problèmes posés. Cette réflexion a porté, d'une part, sur la structure même du filtre et, d'autre part, sur sa configuration.

La solution apportée par l'invention répond aux différents problèmes.

Selon une première caractéristique de l'invention, le filtre du type réalisé en un tissu de fibre de verre est remarquable en ce qu'il inclut une imprégnation dans une résine enrichie de l'oxyde de fer lui conférant une fonction et propriété apte à l'aimantation.

Selon une autre caractéristique, le filtre coupelle est remarquable en ce qu'il présente une configuration bombée, la bordure périphérique constituant la zone d'appui et de positionnement du filtre dans le siège récepteur du moule de fonderie. Ce positionnement est d'autant mieux assuré que l'imprégnation de la fibre de verre dans la résine enrichie d'oxyde de fer augmente sa rigidité et empêche sa déformation ou son retournement.

D'autre part, pour bomber les filtres, ces derniers subissent une opération de façonnage à haute température ce qui permet dès cette étape de dégazer les filtres évitant que cela ne ce passe à l'étape de fonderie là où les dégazements gazeux sont les plus nocifs.

Ces caractéristiques et d'autres encore ressortiront bien de la suite de la description.

Pour fixer l'objet de l'invention illustrée de manière non limitative aux figures des dessins où :
- La figure 1 illustre de manière schématique l'installation de fonderie incluant un filtre.
- La figure 2 est une vue d'un filtre selon l'art antérieur.
- Les figures 3 et 4 montrent la déformation du filtre selon l'art antérieur dans la zone de leur siège en fond de moule au niveau de la masselotte.
- La figure 5 montre un filtre selon l'invention dans une première mise en oeuvre en configuration bombée selon une structure différenciée.
- La figure 6 est une vue schématique illustrant la mise en place d'un disque selon l'invention dans le siège prévu en fond de moule.

Afin de rendre plus concret l'objet de l'invention, on le décrit maintenant d'une manière non limitative illustrée aux figures des dessins.

Le filtre, selon l'invention, est référencé par (10). Il est réalisé en un tissu en fibre de verre selon une maille adaptée aux besoins pour permettre la filtration du fluide se trouvant dans le four constitutif d'un équipement de fonderie d'alliage d'aluminium, magnésium ou cuivre.

Selon l'invention, le filtre qui est de préférence de configuration bombée intègre, par trempage, une résine enrichie à l'oxyde de fer lui conférant des propriétés aptes à l'aimantation. L'imprégnation de cette résine s'effectue sur tout ou partie de la surface du filtre.

Le filtre, selon l'invention, peut être de configuration plate mais, dans une mise en oeuvre optimisée, la forme est bombée (10a) comme représentée figure 5. Une telle disposition permet de positionner le filtre en position inverse dans son siège de telle sorte que son rebord périphérique (10b) vienne en appui et en contact du fond de la cavité réceptrice. En se référant à la figure 6, le filtre présente sa partie centrale bombée face au diffuseur intégré dans la partie supérieure du moule présent de l'équipement de sorte à venir sensiblement en butée contre celui-ci. L'arrivée du métal (AM) et les sollicitations générées par le fluide participent à la stabilité du filtre (10) qui est coincé et ne peut laisser le passage et créer des brèches pour l'évacuation du fluide en provenance du four. Le filtre assure sa fonction de filtration donc en totalité. En variante, le filtre présente une bordure périphérique relevée.

Les avantages ressortent bien de l'invention. On souligne, tout d'abord, la très grande facilité de manipulation et transport des filtres de par leurs propriétés structurelles métalliques et la capacité de pouvoir d'aimantation. On peut avoir des robots manipulateurs incorporant des moyens complémentaires d'aimantation pour saisir les filtres et les positionner dans leur logement, et ce dans le cadre d'un automatisme adéquat. La séparation de la partie des filtres de la pièce complémentaire du fond disposé sur le robot manipulateur est effectuée de toute manière appropriée.

Un autre avantage réside par la configuration nouvelle, bombée du filtre pour assurer un meilleur maintien et stabilité dans le siège récepteur et en leur évitant tout débattement créant des zones d'échappement de fluide et donc des oxydes. La filtration est donc maximum.

Un autre avantage réside dans le fait qu'à l'opération de façonnage des filtres qui se passe à haute température, les filtres se dégazent sous l'effet de la température évitant ainsi des dégazements gazeux ultérieurs dans les moules.

Un autre avantage réside dans le fait que les filtres, selon l'invention, dans la mise en oeuvre décrite, flottent sur le métal liquide, ce qui permet de recycler l'ensemble masselotte + filtre. On évacue les filtres qui flottent à la surface avec un écumoir comme des crasses.

L'invention offre ainsi de nombreux avantages par rapport à l'art antérieur.

## Revendications

1. Filtre (10) destiné à la fonderie du type réalisé en un tissu de fibre de verre **caractérisé en ce qu'**il inclut une imprégnation dans une résine enrichie de l'oxyde de fer lui conférant une fonction et propriété apte à l'aimantation et permettant un recyclage de l'ensemble masselotte + filtre qui permet de récupérer le métal et les filtres à mettre en déchets.

2. Filtre (10) selon la revendication 1 **caractérisé en ce qu'**il présente une configuration bombée (10a), la bordure périphérique (10b) constituant la zone d'appui et de positionnement du filtre pour son utilisation dans le siège récepteur d'un moule de fonderie.

3. Procédé de fabrication de filtres selon l'une quelconque des revendications 1 et 2 **caractérisé en ce que** un tissu de fibre de verre est trempé dans une résine enrichie de l'oxyde de fer et ensuite façonné en une configuration désirée à haute température, de sorte que lors de l'opération de façonnage des filtres à haute température, les filtres se dégazent sous l'effet de la température.

## Claims

1. Filter (10) intended for use in a foundry of the type made of glass fibre fabric **characterised in that** it involves impregnation in a resin enriched with iron oxide which gives it a function and property whereby it is capable of being magnetised and allows recycling of the head metal + filter assembly which makes it possible to recover the metal and the filters that are to be scrapped.

2. Filter (10) as claimed in claim 1, **characterised in that** it has a convex configuration (10a) with its peripheral edge (10b) constituting the support and positioning area of the filter during its subsequent use in the accommodating seat of a foundry mould.

3. Method for manufacturing filters as claimed in either claim 1 or 2, **characterised in that** a glass fibre fabric is immersed in a resin which is enriched with iron oxide and then shaped to a desired configuration at high temperature so that, during the operation of shaping the filters at high temperature, the filters outgas due to the effect of high temperature.

## Patentansprüche

1. Gießerei-Filter (10) nach Art derjenigen aus einem Glasfasergewebe, **dadurch gekennzeichnet, dass** er eine Imprägnierung in einem mit Eisenoxid angereicherten Harz umfasst, die ihm eine für die Magnetisierung geeignete Funktion und Eigenschaft verleiht und ein Recycling der Baueinheit Speiser + Filter für die Rückgewinnung des Metalls und der als Abfall zu entsorgenden Filter ermöglicht.

2. Filter (10) nach Anspruch 1, **dadurch gekennzeichnet, dass** er eine gewölbte Form (10a) aufweist, wobei die Randeinfassung (10b) den Auflage- und Positionierbereich des Filters für seinen Gebrauch im Aufnahmesitz einer Gussform bildet.

3. Verfahren zur Herstellung von Filtern nach Anspruch 1 oder 2, **dadurch gekennzeichnet, dass** ein Glasfasergewebe in ein mit Eisenoxid angereichertes Harz getaucht und dann bei hoher Temperatur in eine gewünschte Form gebracht wird, so dass die Filter bei der Hochtemperaturformgebung unter Einwirkung der Temperatur entgast werden.
